# EUROPEAN PATENT APPLICATION

(11) **EP 4 585 791 A1**
(43) Date of publication of application: **16.07.2025**
(21) Application number: 24221524.2
(22) Date of filing: 19.12.2024
(51) Int. Cl.: F01D 25/18, F01D 21/12

(54) **SYSTEMS AND METHODS FOR AIR AND OIL SEPARATION USING AN EJECTOR**

(30) Priority: 11.01.2024 US 202418410027
(71) Applicant: General Electric Technology GmbH, 5400 Baden (CH)
(72) Inventor: GONZALEZ TELLEZ, Victor Alfonso, 76146 Queretaro (MX); SANCHEZ RUBIO, Oswaldo Alberto, 76146 Queretaro (MX); REGLA FELIX, J. Eliseo B., 76146 Queretaro (MX); HUYNH, Tuy C., Houston, 77041 (US)
(74) Representative: Rüger Abel Patentanwälte PartGmbB

(57) **Abstract**

An oil recovery system for recovering oil from an air/oil mixture from a gas turbine engine, the oil recovery system including a first separator coupled to receive the air/oil mixture from an air/oil mixture source, wherein the first separator separates at least a portion of oil from the air/oil mixture and an ejector for drawing the air/oil mixture contained in the first separator into the ejector. The ejector combines the drawn air/oil mixture and the compressed air such that the resulting combined mixture of compressed air and drawn air/oil mixture has a lower temperature as compared to a temperature of the air/oil mixture contained in the first separator, and wherein the recovered oil is captured.

## Description

### TECHNICAL FIELD

The field of the disclosure relates generally to systems and methods for separating oil from air and more particularly, to systems and methods for separating oil and air using an ejector.

### BACKGROUND

Oil recovery systems may be used to separate and recover oil that has been entrained within the ambient air surrounding rotating mechanical components, such as driveshafts and/or bearings associated with a power generation system that includes a gas turbine engine, for example. Conventional oil recovery systems are typically positioned near a facility, or a roof of the building, containing the power generation system. An air/oil mixture may be drawn from the gas turbine engine, *e.g*., using a motor and a pump, and conventionally, a heat exchanger is used to cool the air/oil mixture, before the cooled air/oil mixture is introduced into one or more separation tanks. Cooling the air/oil mixture facilitates separation and stratification of the oil and the air improving the efficiency of the separator tanks. The heat exchanger is powered by a motor that reduces the overall efficiency of the power generation system. Furthermore, known oil recovery systems, including separator tanks, heat exchangers, motors, etc., generally require a large overall footprint.

Accordingly, a need exists for improved systems and methods for separating and capturing oil in order to overcome the limitations described above.

### SUMMARY

In one aspect, an oil recovery system for recovering oil from an air/oil mixture from a gas turbine engine is provided. The oil recovery system includes a first separator coupled to receive the air/oil mixture from an air/oil mixture source. The first separator separates at least a portion of oil from the air/oil mixture. The system includes an ejector having a first inlet, a second inlet, and an outlet. The first inlet receives compressed air used to draw the air/oil mixture contained in the first separator into the ejector through the second inlet. The ejector combines the drawn air/oil mixture and the compressed air such that the resulting combined mixture of compressed air and drawn air/oil mixture has a lower temperature as compared to a temperature of the air/oil mixture contained in the first separator, and wherein the recovered oil is captured.

In another aspect, an oil recovery system for recovering oil from an air/oil mixture from a gas turbine engine is provided. The oil recovery system includes an ejector having a first and second inlet and an outlet. The first inlet is configured to receive compressed air. The compressed air draws air/oil mixture from an air/oil mixture source into the ejector through the second inlet. The ejector combines the drawn air/oil mixture and the compressed air such that the combined mixture of the compressed air and drawn air/oil mixture is decreased in temperature compared to the temperature of the air/oil mixture. The system includes a first separator configured to receive the combined mixture, the first separator separates at least a portion of oil from the air/oil mixture, and wherein the recovered oil is captured.

In another aspect, a method of recovering oil is provided. The method includes drawing an air/oil mixture from an air/oil source into a first separator and separating a first amount of oil from the air/oil mixture by the first separator creating a reduced oil mixture. The method further includes delivering compressed air to a first inlet of an ejector, causing the reduced oil mixture contained in the first separator to be drawn into a second inlet of the ejector. Compressed air and the drawn reduced oil mixture is mixed within a main channel of the ejector, and the reduced oil mixture is decreased in temperature compared to the temperature of the air/oil mixture contained in the first separator. The method includes ejecting the combined mixture through an outlet of the ejector.

### BRIEF DESCRIPTION OF THE DRAWINGS

These and other features, aspects, and advantages of the present disclosure will become better understood when the following detailed description is read with reference to the accompanying drawings in which like characters represent like parts throughout the drawings, wherein:
FIG. 1 is a schematic illustration of an exemplary separation system.
FIG. 2 is a schematic illustration of another exemplary separation system.
FIG. 3 is a schematic illustration of a further exemplary separation system.
FIG. 4 is a flow chart of an exemplary method of operating a separation system.

Unless otherwise indicated, the drawings provided herein are meant to illustrate features of embodiments of the disclosure. These features are believed to be applicable in a wide variety of systems comprising one or more embodiments of the disclosure. As such, the drawings are not meant to include all conventional features known by those of ordinary skill in the art to be required for the practice of the embodiments disclosed herein.

### DETAILED DESCRIPTION

In the following specification and the claims, reference will be made to a number of terms, which shall be defined to have the following meanings. The singular forms "a," "an," and "the" include plural references unless the context clearly dictates otherwise. "Optional" or "optionally" means that the subsequently described event or circumstance may or may not occur, and that the description includes instances where the event occurs and instances where it does not. Furthermore, references to "one embodiment" are not intended to be interpreted as excluding the existence of additional embodiments that also incorporate the recited features. Moreover, unless explicitly stated to the contrary, embodiments "including" or "having" an element or a plurality of elements having a particular property may include additional such elements not having that property.

As used herein, the term "real-time" refers to either the time of occurrence of the associated events, the time of measurement and collection of predetermined data, the time to process the data, or the time of a system response to the events and the environment. In the embodiments described herein, these activities and events occur substantially instantaneously.

Embodiments described herein include an oil recovery system including an ejector that facilitates recovering oil, such as lubricant oil, which has been entrained in air surrounding rotating mechanical components, such as, driveshafts and/or bearings, associated with a power generation system including a gas turbine engine. The air/oil mixture may be drawn from an area in proximity to mechanical components of the gas turbine engine and delivered to the air/oil separation system. The separation system separates the oil from the air, enabling the recovered and/or captured oil to be repurposed and/or recycled for another lubrication process, stored for future use, and/or cleaned. In embodiments described herein, the separation system does not require a heat exchanger or a motor to power the heat exchanger. Rather, in some embodiments described herein, the separation system may include an ejector that mixes the air/oil mixture with compressed air, to facilitate cooling the air/oil mixture. In some embodiments, a controller selectively adjusts the ejector and/or the compressed air, based on the ambient temperature, thus facilitating additional improvements to the overall power efficiency of the power generation system, and the efficiency of the separation system.

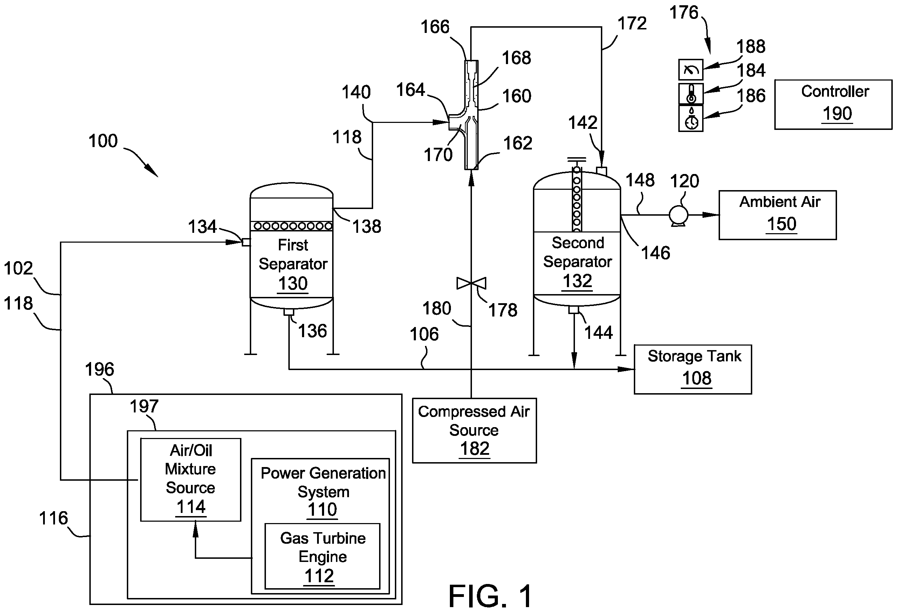

Referring now to the drawings, FIG. 1 is a schematic illustration of an exemplary separation system 100 for use in separating oil, *e.g*., hydraulic lubricant, mineral oil, synthetic lubricating oil, AeroShell 500^{™}, AeroShell 560^{™}, BP 2380^{™}, Mobil Jet Oil II^{™}, Turbonycoil 600^{™}, BP 2197^{™}, and Mobil Jet Oil 254^{™}, or any suitable lubricant, from an air/oil mixture 102. The air/oil mixture 102 may include droplets or molecules of oil entrained in the air. The separation system 100 may be incorporated with a power generation system 110 including a gas turbine engine 112, or any other suitable type of engine, which includes one or more rotating mechanical components, such as driveshafts and bearings, which are lubricated by oil to facilitate reducing friction and/or wear. The droplets of the oil may be released into, and entrained with, air surrounding the mechanical components, particularly when mechanical components are rotating at high speeds. The separation system 100 may receive and/or retrieve this air/oil mixture 102 from an area near air/oil mixture source 114.

In some embodiments, one or more components of the power generation system 110 may be housed within an enclosure 197 with a facility 116, e.g., a building or a designated area, and/or a location with one or more components positioned in an outside area that may be exposed to the ambient air, and the air/oil mixture 102 from the air/oil mixture source 114 may be captured, *e.g*., using fume hoods or vents (not shown), and transferred from the power generation system 110 to the separation system 100 using pipes, conduits, and/or ducts 118. In other embodiments, the separation system 100 may receive the air/oil mixture 102 from any suitable air/oil mixture source 114, including sources near additional or alternative mechanical components and/or power generations systems. In some embodiments, the separation system 100 may draw the air/oil mixture 102 through the ducts 118 from the air/oil mixture source 114 using any suitable flow motive devices 120, such as pumps or blowers, not shown. In some embodiments, the air/oil mixture 102 may be motivated to move through the ducts 118 using pressure differentials and/or gravitational forces.

In reference to FIG. 1, the separation system 100 includes a first separator 130, also referred to herein as a pre-separator, and a second separator 132 that is downstream from the first separator 130. The first separator 130 may be smaller, *e.g*., having a smaller footprint and/or a smaller inner volume/capacity, as compared to the second separator 132. In some embodiments, the first and second separators 130, 132 may have a similar size/capacity. The first and second separators 130, 132 are any suitable separator that enables the separation system 100 described herein to function, including, for example and without limitation, a pressurized tank that separates fluids, *e.g.,* oil and air, using density stratification.

In the exemplary embodiment, the first separator 130 includes a first inlet 134 for receiving the air/oil mixture 102 from the air/oil source, and a first outlet 136 for releasing a first amount of oil separated from the air/oil mixture 102 by the first separator 130. The separated oil may be in a liquid form. In some embodiments, the first separator 130 does not separate the entirety of the oil contained in the air/oil mixture 102, and in such an embodiment, the first separator 130 includes a second outlet 138 for releasing the remaining air/oil mixture 102, also referred to as a reduced oil mixture 140, that contains any remaining oil not separated by the first separator 130. The reduced oil mixture 140, released from the first separator 130, may be delivered to the second separator 132, through a first inlet 142 of the second separator 132, to enable the second separator 132 to further separate additional oil from the reduced oil mixture 140. The second separator 132 includes a first outlet 144 for releasing the separated oil from the mixture, and a second outlet 146 for releasing air 148 separated from the reduced oil mixture 140. In some embodiments, the second outlet 146 of the second separator 132 may vent the separated air 148 to the atmosphere or to the ambient air 150, such as the air surrounding the exterior of the facility 116. In some embodiments, recovered oil 106 that is separated and recovered by the separation system 100, *e.g.,* by the first and second separators 130, 132, may be delivered to a storage tank 108 through ducts 118. The separated oil may be recycled and returned to mechanical components for lubrication purposes.

The separation system 100 includes an ejector 160 for cooling the air/oil mixture 102 to facilitate separation of the oil from the air. In the exemplary embodiment, the ejector 160 is downstream from the first separator 130 and is upstream from the second separator 132. The ejector 160 may include a first inlet 162, a second inlet 164, and a single outlet 166. The ejector 160 also includes a main channel 168 that extends between the first inlet 162 and the outlet 166. The second inlet 164 is coupled to a secondary channel 170, between the first inlet 162 and the outlet 166, that leads into the main channel 168. The first inlet 162 may receive compressed air 180 from a compressed air source 182, and the compressed air 180 may flow through the main channel 168 towards the outlet 166. The compressed air source 182 may be a preexisting compressor used with, or in association with, the gas turbine engine 112 and/or the power generation system 110. The compressed air source 182 may be located within the facility 116, but outside of a building that houses the gas turbine engine 112, for example. In some embodiments, the compressed air source 182 may be an inlet compressor that is upstream from an inlet of the gas turbine engine 112 for compressing inlet air of the gas turbine engine 112. In some embodiments, the compressed air source 182 maybe a pre-existing compressor associated with the facility 116 or one or more supplemental operations in association with the gas turbine engine 112. In some embodiments, supplemental operations may include compressed air used to clean or purge piping of other auxiliary systems, actuate pneumatic dampers, louvers, or valves and provide cooling effect to other components.

In separation system 100, the second inlet 164 may receive the reduced oil mixture 140 exiting the second outlet 138 of the first separator 130. The compressed air 180, flowing through the main channel 168 of the ejector 160, generates a vacuum force within the secondary channel 170 of the ejector 160 that acts to draw out the reduced oil mixture 140 from the second outlet 138 of the first separator 130 and into the ejector 160. The reduced oil mixture 140 may be pulled into the second inlet 164, through the secondary channel 170 and into the main channel 168 wherein the mixture is combined with the compressed air 180 flowing in the main channel 168. The mixing of the compressed air 180 and the reduced oil mixture 140 facilitates reducing the temperature of the reduced oil mixture 140 resulting in a cooled mixture 172. In some embodiments, the ejector 160 facilitates cooling the combined mixture to a temperature that is below 200 °F. For example, the compressed air 180 has a lower temperature than the temperature of the reduced oil mixture 140 exiting the first separator 130, such that the compressed air 180 mixing with the reduced oil mixture 140 facilitates cooling the reduced oil mixture 140. Cooling using the ejector 160 eliminates the need for a heat exchanger for cooling purposes, as well as eliminates the need for an associated motor to power a heat exchanger. Moreover, the separator system 100 may not require additional power, *e.g.,* such as a motor, to draw the reduced oil mixture 140 into the ejector 160. In some embodiments, the ejector 160 may include a valve, or any other flow control device, to enable the flow of fluid to be directed and/or controlled through the ejector 160.

The cooled mixture 172, *e.g.,* the combination of compressed air 180 and the reduced oil mixture 140, exits the ejector 160 at the outlet 166 and is subsequently delivered to the first inlet 142 of the second separator 132.

In embodiments described herein, fluid, *e.g.,* the air/oil mixture 102, compressed air 180, reduced oil mixture 140, and/or cooled mixture 172, etc., may be transferred between components, *e.g*., the first and second separators 130, 132, and the ejector 160 using conduits, pipes, and/or ducts 118. In some embodiments, fluids may be motivated to move through ducts 118 using pressure differentials and/or gravitational forces. In some embodiments, the separator system may include one or more flow motive devices 120, *e.g.,* pumps, blowers, etc. and/or one or more flow control devices 178, *e.g.,* valves or other flow metering devices to regulate a flow parameter of the flow of fluid through the ducts 118, at various locations within the separator system 100, *e.g*., upstream and/or downstream from any and/or all of the components of the separation system 100. In some embodiments, the separation system includes one or more sensors 176, *e.g.,* a temperature sensor 184, a flow rate sensor 186, and/or a pressure sensor 188, at various locations within the separator system 100, *e.g*., upstream and/or downstream from any and/or all of the components of the separation system 100. In some embodiments, the separation system 100 may include a controller 190 communicatively coupled to the sensors 176, to the flow motive devices 120, and/or to the flow control devices 178. The controller 190 may transmit signals to control/adjust the flow motive devices 120 and/or the flow control devices 178. The controller 190 may also transmit signals to the first and second separators 130, 132, and/or the ejector 160 to adjust a parameter of the component.

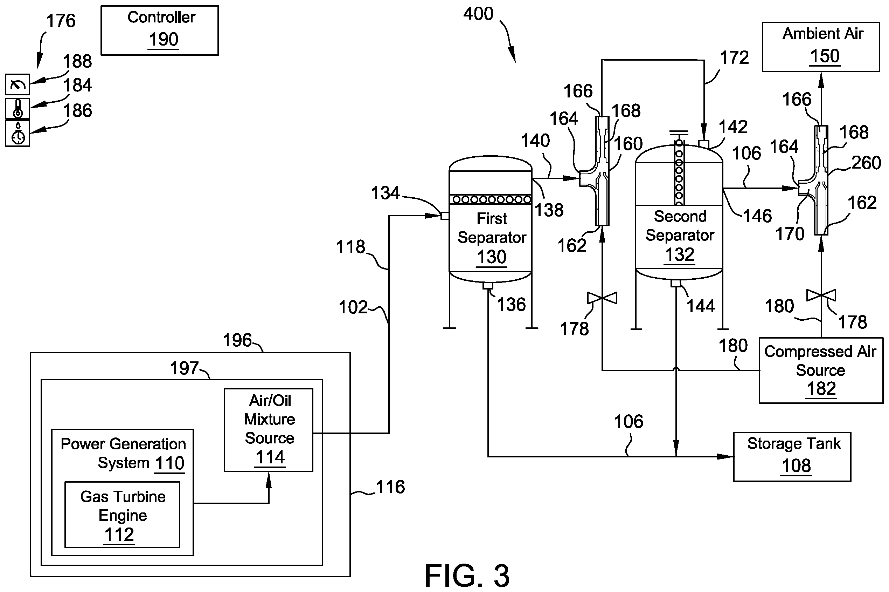

In some embodiments, the separation system 100 may be located outside of the facility 116. For example, the separation system 100 may be positioned on a roof 196 of a building located within the facility 116. As such, in some embodiments, one or more components of the separation system 100 may be exposed to air surrounding the facility 116, *e.g.,* the ambient air 150, and/or fluid between or within components, and when weather temperature conditions are sufficiently cool, *e.g.,* less than 160 °F, such that the ambient air 150 may cool the components and subsequently cool the fluid, *e.g.,* air/oil mixture 102 and/or the reduced oil mixture 140, contained within or between the components. In some embodiments, the temperature sensor 184 detects the ambient temperature of the ambient air 150. In some embodiments, the temperature sensor 184 may be positioned in the ducts 118 and/or the components to detect a temperature of the fluid therein. In some embodiments, the temperature sensor 184 is located in a duct 118 downstream from the first separator 130 and upstream from the second separator 132. In some embodiments, the temperature sensor 184 is located in a duct 118 downstream from the ejector 160 and the first separator 130, and upstream from the second separator 132. In some embodiments, the temperature sensor 184 is located downstream from the second separator 132. In the embodiments shown in Fig. 1 and 3, the temperature sensor 184 may be positioned downstream from the first ejector 160 and upstream from the second separator 132 to detect the temperature of cooled mixture 172.

The controller 190 may receive/retrieve temperatures from any or all of the temperature sensors 184 positioned at any suitable location, as described above. If the controller 190 determines that a temperature is sufficiently cool, the separation system 100 may not need to use the ejector 160 to cool the fluids, but rather, the surrounding ambient air 150 may cool the components and/or the fluids contained in the components, and in such a situation, the controller 190 may transmit a signal to shut off the ejector 160. For example, in such a situation, the controller 190 may transmit one or more signals to flow motive devices 120 and/or flow control devices 178 between the compressed air source 182 and the ejector 160 to stop and/or reduce the flow of compressed air 180 delivered to the ejector 160. Moreover, in some embodiments, either the ejector 160 and/or the ambient air 150 may be used to cool the air/oil mixture 102 to facilitate separation of the oil from the air, improving the overall efficiency of the power generation system 110 incorporated with the separation system 100. Accordingly, the controller 190 may selectively adjust parameters of the separation system 100 to conserve energy. In some embodiments, it is unnecessary to utilize flow motive devices 120, as compressed air 180, from the compressed air source 182, will be motived through ducts 118 by pressure differentials.

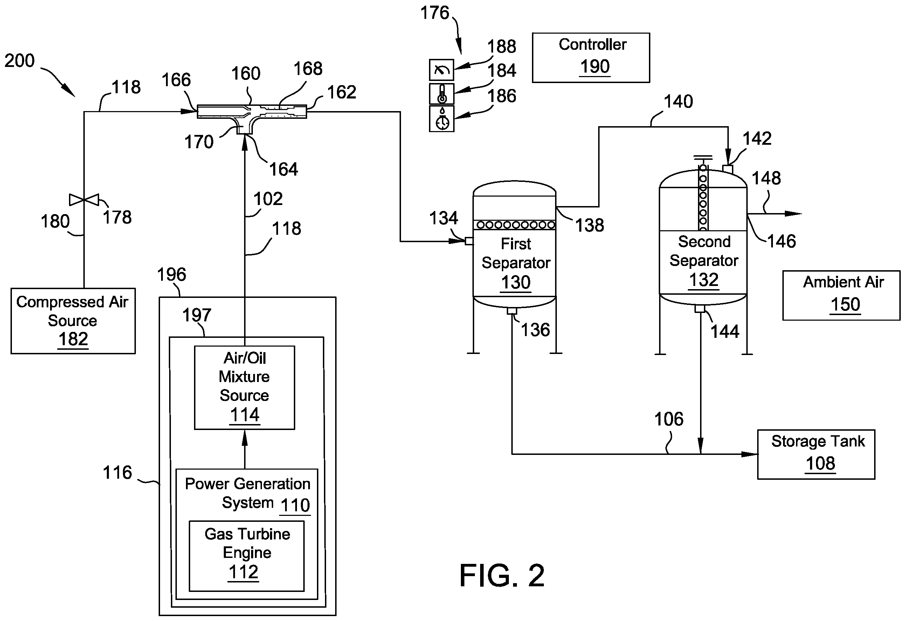

FIG. 2 is a schematic of an exemplary separation system 200 including one or more components that are similar to the components of separation system 100 (shown in FIG. 1). Separation system 200 includes the first and second separators 130, 132 and the ejector 160. The separation system 200 receives an air/oil mixture 102 from the air/oil mixture source 114 associated with the power generation system 110. In separation system 200, the ejector 160 is upstream from the first separator 130. In particular, the first inlet of the ejector 160 receives compressed air 180 and the second inlet 164 receives, or draws in, the air/oil mixture 102 from the air/oil mixture source 114 using the vacuum force created by the flow of the compressed air 180 through the main channel 168 of the ejector 160. The combined compressed air 180 and the air/oil mixture 102 is then supplied to the first inlet 134 of the first separator 130 wherein the air/oil mixture is separated as described above.

FIG. 3 is a schematic of a further separation system 400. The separation system 400 includes one or more components that are similar to the components of the separation systems 100, and 200. Separation system 400 includes the first and second separators 130, 132 and an ejector 160. The separation system 400 receives the air/oil mixture 102 from the air/oil mixture source 114 associated with the power generation system 110, in particular, the air/oil mixture 102 is supplied, or draw into, the first inlet 134 of the first separator 130. In the separation system 400, the ejector 160 is disposed between the first separator 130 and the second separator 132. In separation system 400, the first inlet 162 of the ejector 160 receives compressed air 180 from the compressed air source 182. The second inlet 164 receives, or draws in, the reduced oil mixture 140 from the second outlet 138 from the first separator 130, using the vacuum force created by the flow of the compressed air 180 through the main channel 168 of the ejector 160, creating the cooled mixture 172. The mixture 172 of compressed air 180 and the reduced oil mixture 140 is then supplied to the first inlet 142 of the second separator 132.

In separation system 400, a second ejector 260 is downstream from the second separator 132. The second ejector 260 receives, via a first inlet 162, compressed air 180 from a compressed air source 182. A second inlet 164 of the second ejector 260 is coupled to the second outlet 146 of the second separator 132. The vacuum forces created by the compressed air 180 flowing through the main channel 168 of the second ejector 260 draw out the separated air from the second separator 132. Furthermore, the second ejector 260 acts to draw working fluid, *e.g.,* air/oil mixture 102, compressed air 180, ambient air 150, or mixtures of such, through the separation system 400. For example, the vacuum force created by the second ejector 260 pulls in the air/oil mixture 102 from the air/oil mixture source 114 and into the first inlet 134 of the first separator 130. In addition, the vacuum force created by the second ejector 260 pulls the reduced oil mixture 140 from the second outlet 138 of the first separator 130 and into the first inlet 142 of the second separator 132.

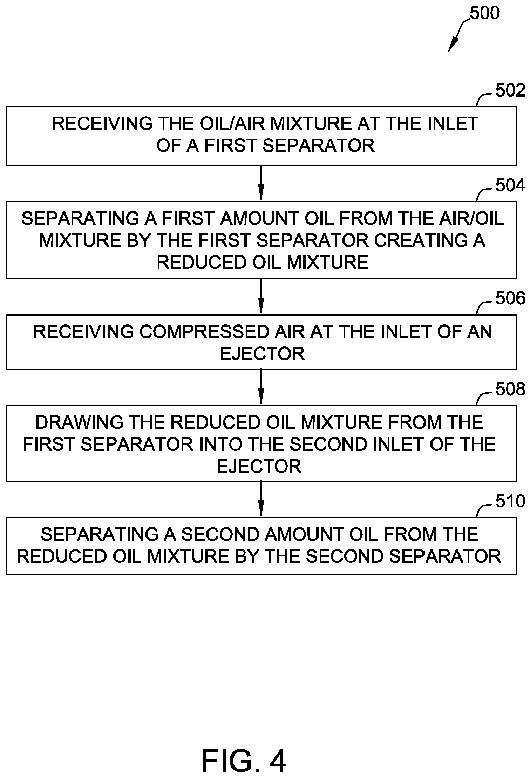

FIG. 4 is a flow diagram of an exemplary method 500 for operating any of the separation systems 100, 200, and/or 400 (shown in Figs 1, 2, and 3). Initially, within the method 500 the air/oil mixture 102 is received 502 from the air/oil mixture source 114 via a separation system 100, 200, and/or 400. In some embodiments, the air/oil mixture 102 may be received 502 via the first inlet 134 of the first separator 130. (*see* FIG. 1, 2, and 3). In some embodiments, the air/oil mixture 102 may be received via the second inlet 164 of the ejector 160. (*See* Fig. 2). The air/oil mixture 102 may be moved between the air/oil mixture source 114 and the separator systems 100, 200, and 400 using flow motive devices, pressure differentials, and/or gravitational forces. In some embodiments, the vacuum force of the ejector 160 may draw the air/oil mixture 102 from the air/oil mixture source 114. (*See* FIG. 2).

Compressed air 180 is then received 506 from the compressed air source 182, at the first inlet 162 of the ejector 160. The compressed air 180 may be moved from the compressed air source 182 to the ejector 160 by a pressure differential. As described above, the compressed air 180 traveling through the main channel 168 of the ejector 160 creates a vacuum that facilitates that draws 508 fluid into the second inlet 164 of the ejector 160. In separation system 100, the method 500 uses vacuum forces to draw 508 the reduced oil mixture 140 into the second inlet of the ejector 160 from the second outlet of the first separator 130. (*See* Fig. 1). In separation system 200, and 400, within the method 500, a vacuum draws 508 the reduced oil mixture 140 or ambient air 150 into the second inlet of the ejector 160. *See* Figs. 2 and 3.

In some embodiments, the method 500 includes the second ejector 260 receiving compressed air 180 at the first inlet 162 of the second ejector 260. The method 500 also includes the second ejector 260 receiving compressed air 180 at the first inlet 162 and drawing in air exiting the second outlet 146 of the second separator 132 and into the second inlet 164 of the second ejector 260.

In some embodiments, the method 500 includes detecting using one or more sensors, the temperature of the ambient air 150 surrounding the separation systems 100, 200, and/or 400. The method 500 may also include receiving at controller 190 the detected temperature. Method 500 may include the controller 190 transmitting one or more signals to the flow control device 178 to regulate the flow of compressed air 180 delivered to the first inlet of the ejector 160. The method 500 may further include comparing the ambient temperature or a temperature of a fluid in the separation system 100, 200, and/or 400 to a temperature criterion. In some embodiments, the method 500 includes completely closing the flow control device 178, in response to the controller 190 determining that the temperature satisfies the temperature criterion, *e.g*., the detected temperature is below a temperature threshold. Additionally, and/or alternatively, the controller 190 may compare the temperature to additional and/or alternative temperature criteria, and the controller 190 may open the flow control device 178, *e.g.,* the detected temperature is above a temperature threshold.

Method 500 includes separating 504 a first amount of oil from the air/oil mixture 102 using the first separator 130, thus creating the reduced oil mixture 140. Method 500 includes separating 510 a second amount of oil from the air/oil mixture 102 from the second separator 132.

In some embodiments, method 500 includes returning the first amount of oil separated from the first separator 130 and/or the second amount of oil separated from the second separator 132 to the storage tank 108.

Embodiments described herein include an oil recovery system including an ejector that facilitates recovering oil, such as lubricant oil, which has been entrained in air surrounding rotating mechanical components, such as, driveshafts and/or bearings, associated with a power generation system including a gas turbine engine. The separation system separates the oil from the air, enabling the recovered oil to be repurposed for another lubrication process. In embodiments described herein, the separation system including the ejector does not require a heat exchanger nor does it require a motor to power a heat exchanger. Rather, the separation system includes an ejector that mixes the air/oil mixture with compressed air, to facilitate cooling the air/oil mixture. The compressed air may be received from a pre-existing compressor associated with the gas turbine engine. Moreover, in some embodiments, either the ejector and/or the ambient air may be used to cool the air/oil mixture to facilitate separation of the oil from the air, improving the overall efficiency of the power generation system 110 incorporated with the separation system. Accordingly, the controller may selectively adjust parameters of the separation system to conserve energy. In some embodiments, a controller selectively adjusts the ejector and/or the compressed air, based on the ambient temperature, thus facilitating additional improvements to the overall power efficiency of the power generation system, and the efficiency of the separation system.

Further aspects of the present disclosure are provided by the subject matter of the following clauses:
1. An oil recovery system for recovering oil from an air/oil mixture from a gas turbine engine, the oil recovery system comprising: a first separator coupled to receive the air/oil mixture from an air/oil mixture source, wherein the first separator separates at least a portion of oil from the air/oil mixture; and an ejector having a first inlet, a second inlet, and an outlet, wherein the first inlet receives compressed air used to draw the air/oil mixture contained in the first separator into the ejector through the second inlet, and wherein the ejector combines the drawn air/oil mixture and the compressed air such that the resulting combined mixture of compressed air and drawn air/oil mixture has a lower temperature as compared to a temperature of the air/oil mixture contained in the first separator, and wherein the recovered oil is recycled.
2. The oil recovery system according to any preceding clause, wherein the ejector receives compressed air from a compressor used in association with a gas turbine engine.
3. The oil recovery system according to any preceding clause, wherein the oil recovery system further comprises a second separator coupled to receive the combined mixture discharged from the outlet of the ejector, the second separator separates at least a portion of oil from the air/oil mixture, and wherein the recovered oil is recycled.
4. The oil recovery system according to any preceding clause, wherein the first separator is configured to receive the air/oil mixture source from an area in proximity to one or more mechanical components of the gas turbine engine.
5. The oil recovery system according to any preceding clause, wherein the ejector facilitates cooling the combined mixture to a temperature that is below about 200 °F.
6. The oil recovery system according to any preceding clause, wherein the recovered oil is returned to one or more mechanical components of the gas turbine engine.
7. The oil recovery system according to any preceding clause, wherein the oil recovery system comprises: a temperature sensor; a valve positioned between a compressor and the ejector, the compressor used to supply compressed air to the first inlet of the ejector; and a controller configured to: receive a temperature detected by the temperature sensor; and transmit a signal to the valve to control a flow parameter of compressed air based on the detected temperature.
8. An oil recovery system for recovering oil from an air/oil mixture from a gas turbine engine, the oil recovery system comprising: an ejector having a first and second inlet and an outlet, wherein the first inlet is configured to receive compressed air, wherein the compressed air draws air/oil mixture from an air/oil mixture source into the ejector through the second inlet, and wherein the ejector combines the drawn air/oil mixture and the compressed air such that the combined mixture of the compressed air and drawn air/oil mixture is decreased in temperature compared to the temperature of the air/oil mixture; and a first separator configured to receive the combined mixture, the first separator separates at least a portion of oil from the air/oil mixture, and wherein the recovered oil is recycled.
9. The oil recovery system according to any preceding clause, wherein the ejector receives compressed air used in association with a gas turbine engine.
10. The oil recovery system according to any preceding clause, wherein the oil recovery system further comprises a second separator configured to receive the air/oil mixture from the first separator, the second separator separates at least a portion of oil from the air/oil mixture, and wherein the recovered oil is recycled.
11. The oil recovery system according to any preceding clause, wherein the air/oil mixture source includes an area in proximity to one or more mechanical components of the gas turbine engine.
12. The oil recovery system according to any preceding clause, wherein the ejector facilitates cooling the combined mixture to a temperature that is below about 200 °F.
13. The oil recovery system according to any preceding clause, wherein the recovered oil is returned to one or more mechanical components of the gas turbine engine.
14. The oil recovery system according to any preceding clause, wherein the oil recovery system comprises: a temperature sensor; a valve positioned between a compressor and the ejector, the compressor used to supply compressed air to the first inlet of the ejector; and a controller configured to receive temperatures detected by the temperature sensor and transmit signals to the valve to control a flow parameter of compressed air.
15. The oil recovery system according to any preceding clause, wherein the oil recovery system further comprises a second ejector having a first and second inlet and an outlet, wherein the first inlet is configured to receive compressed air, wherein the compressed air draws air/oil mixture contained in the second separator into the ejector through the second inlet.
16. The oil recovery system according to any preceding clause, wherein the second separator has a greater capacity compared to the first separator.
17. A method of recovering oil, the method comprising: drawing an air/oil mixture from an air/oil source into a first separator; separating a first amount of oil from the air/oil mixture by the first separator creating a reduced oil mixture; delivering compressed air to a first inlet of an ejector, causing the reduced oil mixture contained in the first separator to be drawn into a second inlet of the ejector, wherein compressed air and the drawn reduced oil mixture is mixed within a main channel of the ejector, and the reduced oil mixture is decreased in temperature compared to the temperature of the air/oil mixture contained in the first separator; and ejecting the combined mixture through an outlet of the ejector.
18. The method according to any preceding clause, wherein the method further includes: delivering the ejected combined mixture to a second separator; and separating a second amount of oil from the combined mixture.
19. The method according to any preceding clause, wherein drawing the air/oil mixture from the air/oil source includes drawing the air/oil mixture from an area surrounding one or more mechanical components of a gas turbine engine.
20. The method according to any preceding clause, wherein the method further comprises: detecting a temperature using a temperature sensor; comparing the temperature to a temperature criterion using a controller; and in response to the comparison, adjusting a position of a valve located between the compressed air source and the first inlet of the ejector.

The above description is meant to be exemplary only, and one skilled in the art will recognize that changes may be made to the embodiments described without departing from the scope of the invention disclosed. Modifications, which fall within the scope of the present invention, will be apparent to those skilled in the art, in light of a review of this disclosure, and such modifications are intended to fall within the appended claims.

Although specific features of various embodiments of the disclosure may be shown in some drawings and not in others, this is for convenience only. In accordance with the principles of the disclosure, any feature of a drawing may be referenced and/or claimed in combination with any feature of any other drawing.

This written description uses examples to disclose the embodiments of systems and methods, including the best mode, and also to enable any person skilled in the art to practice the systems and methods, including making and using any devices or systems and performing any incorporated methods. The patentable scope of the systems and methods is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

## Claims

1. An oil recovery system for recovering oil from an air/oil mixture from a gas turbine engine, the oil recovery system comprising:
a first separator coupled to receive the air/oil mixture from an air/oil mixture source, wherein the first separator separates at least a portion of oil from the air/oil mixture; and
an ejector having a first inlet, a second inlet, and an outlet, wherein the first inlet receives compressed air used to draw the air/oil mixture contained in the first separator into the ejector through the second inlet, and wherein the ejector combines the drawn air/oil mixture and the compressed air such that the resulting combined mixture of compressed air and drawn air/oil mixture has a lower temperature as compared to a temperature of the air/oil mixture contained in the first separator, and wherein the recovered oil is captured.

2. The oil recovery system of Claim 1, wherein the ejector receives compressed air from a compressor used in association with a gas turbine engine.

3. The oil recovery system of Claim 1, wherein the oil recovery system further comprises a second separator coupled to receive the combined mixture discharged from the outlet of the ejector, the second separator separates at least a portion of oil from the air/oil mixture, and wherein the recovered oil is captured.

4. The oil recovery system of Claim 1, wherein the first separator is configured to receive the air/oil mixture source from an area in proximity to one or more mechanical components of the gas turbine engine.

5. The oil recovery system of Claim 1, wherein the ejector facilitates cooling the combined mixture to a temperature that is below about 200 °F.

6. The oil recovery system of Claim 1, wherein the recovered oil is returned to one or more mechanical components of the gas turbine engine.

7. The oil recovery system of Claim 1, wherein the oil recovery system comprises:
a temperature sensor;
a valve positioned between a compressor and the ejector, the compressor used to supply compressed air to the first inlet of the ejector; and
a controller configured to:
receive a temperature detected by the temperature sensor; and
transmit a signal to the valve to control a flow parameter of compressed air based on the detected temperature.

8. An oil recovery system for recovering oil from an air/oil mixture from a gas turbine engine, the oil recovery system comprising:
an ejector having a first and second inlet and an outlet, wherein the first inlet is configured to receive compressed air, wherein the compressed air draws air/oil mixture from an air/oil mixture source into the ejector through the second inlet, and wherein the ejector combines the drawn air/oil mixture and the compressed air such that the combined mixture of the compressed air and drawn air/oil mixture is decreased in temperature compared to the temperature of the air/oil mixture; and
a first separator configured to receive the combined mixture, the first separator separates at least a portion of oil from the air/oil mixture, and wherein the recovered oil is captured.

9. The oil recovery system of Claim 8, wherein the ejector receives compressed air used in association with a gas turbine engine.

10. The oil recovery system of Claim 8, wherein the oil recovery system further comprises a second separator configured to receive the air/oil mixture from the first separator, the second separator separates at least a portion of oil from the air/oil mixture, and wherein the recovered oil is captured.

11. The oil recovery system of Claim 8, wherein the air/oil mixture source includes an area in proximity to one or more mechanical components of the gas turbine engine.

12. The oil recovery system of Claim 8, wherein the ejector facilitates cooling the combined mixture to a temperature that is below about 200 °F.

13. The oil recovery system of Claim 8, wherein the recovered oil is returned to one or more mechanical components of the gas turbine engine.

14. The oil recovery system of Claim 8, wherein the oil recovery system comprises:
a temperature sensor;
a valve positioned between a compressor and the ejector, the compressor used to supply compressed air to the first inlet of the ejector; and
a controller configured to receive temperatures detected by the temperature sensor and transmit signals to the valve to control a flow parameter of compressed air.

15. The oil recovery system of Claim 10, wherein the oil recovery system further comprises a second ejector having a first and second inlet and an outlet, wherein the first inlet is configured to receive compressed air, wherein the compressed air draws air/oil mixture contained in the second separator into the ejector through the second inlet.
